# EUROPÄISCHE PATENTSCHRIFT

(11) **EP 3 304 814 B1**
(45) Veröffentlichungstag und Bekanntmachung des Hinweises auf die Patenterteilung: **26.03.2025**
(21) Anmeldenummer: 16727186.5
(22) Anmeldetag: 03.06.2016
(51) Int. Cl.: H04L 41/0873, H04L 41/08

(54) **VLAN-PORT-SIGNALING**
VLAN-PORT-SIGNALING
SIGNALISATION PORT VLAN

(30) Priorität: 03.06.2015 DE 102015210306
(43) Veröffentlichungstag der Anmeldung: 11.04.2018
(73) Patentinhaber: Hirschmann Automation and Control GmbH, 72654 Neckartenzlingen (DE)
(72) Erfinder: KEHRER, Stephan, 72144 Dußlingen (DE); PELZER, Zbigniew, 73252 Lenningen (DE)
(74) Vertreter: Greif, Thomas
(86) Internationale Anmeldenummer: PCT/EP2016/062678
(87) Internationale Veröffentlichungsnummer: WO 2016/193445

(56) Entgegenhaltungen:
- US-A1- 2013 156 031
- US-A1- 2013 329 344
- US-A1- 2013 336 165
- US-B1- 6 330 307

## Beschreibung

Die Erfindung betrifft ein Verfahren zum Betreiben eines Netzwerkes, wobei das Netzwerk mehrere Ports aufweisende Netzwerkgeräte umfasst und die Netzwerkgeräte über Kabel, die in jeweils einen Port eingesteckt sind, zur Datenübertragung miteinander verbunden, wobei jeder Port ein Signalisierungsmittel aufweist, welches zwischen zumindest zwei Signalisierungszuständen umschaltbar ist, gemäß den Merkmalen des Oberbegriffes des Patentanspruches 1.

Aus der DE 10 2015 206 379 ist eine Signalisierung von Port-Verbindungen an Switchen bekannt, bei der ein Signalisierungsmittel eines Ports des einen Netzwerkinfrastrukturgerätes und ein Signalisierungsmittel eines Ports eines weiteren Netzwerkinfrastrukturgerätes in einen als zusammengehörig erkennbaren Signalisierungszustand gebracht werden. Damit ist es möglich, diejenigen Ports für einen Anwender erkennbar zu machen, die über ein Kabel miteinander verbunden werden sollen. US2013/0329344 A1 beschreibt ein Telekommunikations-Patching-System mit einer Vielzahl von Patchkabeln zum selektiven Verbinden verschiedener Paare von Verbindungsanschlüssen und einer Anzeige, die die Verbindungen einer Schaltung anzeigt, die die Verbindungsanschlüsse und die Endvorrichtungen umfasst. US2013/0336165 A1 beschreibt ein Switch-Device, das eine Kommunikationsschnittstelle zum Empfang eines Befehls und ein Identifikationsmodul zum Empfangen des Befehls von der Kommunikationsschnittstelle umfasst, welches den Befehl verarbeitet, um gewünschte Identifikationsinformationen zu bestimmen, ein Link Layer Discovery Protocol (LLDP)-Rahmen auf der Grundlage der gewünschten Identifikationsinformationen erzeugt, wobei der LLDP-Rahmen einen optionalen Type-Length-Value umfasst, der einen zweiten Switch veranlasst, eine Identifikationsfunktion auszuführen und den LLDP-Rahmen an den zweiten Switch über die Kommunikationsschnittstelle überträgt.

Der Erfindung liegt die Aufgabe zugrunde, ein Verfahren zum Betreiben eines Netzwerkes hinsichtlich der Anwenderfreundlichkeit zu verbessern.

Diese Aufgabe ist durch die Merkmale des Patentanspruches 1 gelöst. Erfindungsgemäß ist vorgesehen, dass alle Signalisierungsmittel derjenigen Ports der Netzwerkgeräte in einen als zusammengehörig erkennbaren Signalisierungszustand gebracht werden, die die gleiche VLAN-Konfiguration aufweisen.

Dies hat den Vorteil, dass alle diejenigen Ports der Netzwerkgeräte, die die gleiche VLAN-Konfiguration aufweisen, für einen Anwender sofort erkennbar sind. Dies ist von Vorteil bei der Erstinbetriebnahme, jedoch auch bei Änderungen von bestehenden Netzwerkkonfigurationen, da sofort erkennbar ist, welche Ports die gleiche Konfiguration (beziehungsweise die gleichen Parameter) aufweisen, um das Netzwerk entsprechend zu konfigurieren beziehungsweise zu verkabeln beziehungsweise anzuwenden.

Ein Netzwerkgerät wie zum Beispiel ein Switch kann einen einzigen, im Regelfall aber eine Vielzahl von Ports aufweisen. So kann beispielsweise in einer Gruppe von Netzwerkgeräten, die nur einen einzigen Port aufweisen, sofort erkannt werden, welches Netzwerk mit seinem Port die gleiche Konfiguration beziehungsweise die gleichen konfigurierten Parameter aufweist. Im Regelfall weisen die Netzwerkgeräte mehrere Ports, die nebeneinander beziehungsweise übereinander angeordnet sind, auf, wobei es denkbar ist, dass alle Ports unterschiedlich konfiguriert oder in Gruppen gleichartig beziehungsweise unterschiedlich voneinander konfiguriert oder alle Ports gleich konfiguriert sind. Dies macht das Auffinden gleicherweise konfigurierter Ports besonders schwierig, so dass es von Vorteil ist, einige der Ports eines Netzwerkgerätes, die gleich konfiguriert sind, über die zugehörigen Signalisierungsmittel zu identifizieren und damit von den übrigen, anders konfigurierten Ports zu unterscheiden, deren Signalisierungsmittel dann eine andere Konfiguration signalisieren.

Die Ansteuerung der Signalisierungsmittel wird über eine auf das Netzwerk zugreifende Managementsoftware und / oder über eine in dem Netzwerk integrierte Netzmanagementstation angesteuert. Vorher kann in der Netzmanagementsoftware beziehungsweise in der Netzmanagementstation die anzuzeigende Konfiguration ausgewählt und zur Anzeige bestimmt werden. Das bedeutet, dass ein Anwender über die Netzmanagementsoftware beziehungsweise die Netzmanagementstation die Konfiguration der einzelnen Netzwerkgeräte beziehungsweise die Konfiguration der einzelnen Ports der in dem Netzwerk angeordneten Netzwerkgeräte abfragen und erkennen kann, welche Ports die gleiche Konfiguration aufweisen. Diese können dann von dem Anwender ausgewählt werden, wobei durch diese Auswahl die Ansteuerung der Signalisierungsmittel der Ports mit der gleichen Konfiguration derart angesteuert werden, dass sie in einen Signalisierungszustand gebracht werden, der von dem Signalisierungszustand der übrigen Ports, die von dieser festgestellten und festgelegten Konfiguration abweichen, unterschiedlich ist.

Der Lösung liegt die Idee zugrunde, dass alle Ports der Netzwerkgeräte eines Netzwerkes, die die gleiche Konfiguration aufweisen, angesprochen und deren Signalisierungsmittel, zum Beispiel Leuchtdioden, in einen solchen Signalisierungszustand gebracht werden, aus dem geschlossen werden kann, dass diese Ports gleichartig konfiguriert sind. Als Beispiel ist hier zu nennen, dass der Signalisierungszustand ein permanentes Leuchten der Leuchtdioden oder ein Blinken mit einer bestimmten Frequenz ist.

Es wäre auch denkbar bei Geräten, die z.B. ein graphisches Display besitzen, die entsprechenden Ports direkt graphisch in diesem Display darzustellen. Ein Signalisierungsmittel muss also nicht ein einziges Signalsierungsmittel (wie zum Beispiel eine Leuchtdiode) sein, sondern könnte auch komplexer gestaltet sein (wie zum Beispiel das genannte Display, Monitor oder dergleichen).

Dabei ist es wichtig und von Vorteil, dass die Signalisierungsmittel der jeweiligen Ports der Netzwerkgeräte nicht nur in einen Signalisierungszustand gebracht werden, der sie als zusammengehörig erkennen lässt, sondern dass auch ein Unterschied zu dem Signalisierungszustand der übrigen Signalisierungsmittel der Ports des jeweils zugehörigen Netzwerkgerätes bzw. aller übrigen Netzwerkgeräte (z. B. dann, wenn mehrere Netzwerkgeräte in einem Patchfeld zusammengefasst sind) erkennbar ist. Beispielsweise sind in üblicher Weise in einem Rack oder einem Patchfeld mehrerer Netzwerkgeräte wie Switches übereinander und/nebeneinander zusammengefasst. Diese einzelnen Switche weisen eine Reihe von Ports auf (z. B. nebeneinander liegend, aber auch übereinander angeordnet), wobei jedem Port im Regelfall ein Signalisierungsmittel, beispielsweise eine Leuchtdiode, zugeordnet ist. Im normalen Betriebsfall, wenn ein solches Patchfeld verkabelt ist und in Betrieb genommen wurde, blinkt eine Vielzahl von Leuchtdioden durcheinander. In diesem Fall ist es wichtig, dass die zu signalisierenden Ports, die die gleiche Konfiguration aufweisen, die Signalisierungsmittel in einen solchen Signalisierungszustand gebracht werden, der nicht nur erkennen lässt, dass die Ports mit der gleichen Konfiguration zusammengehören, sondern der sich auch von den übrigen Signalisierungszuständen der übrigen Ports der Netzwerkgeräte deutlich unterscheidet. An dieser Stelle kann daran gedacht werden, dass für den normalen Betriebsfall während der Datenübertragung die Signalisierungsmittel der Ports der Netzwerkgeräte in üblicher Weise in Abhängigkeit von der Datenübertragung blinken und die erkennbar zu machenden Ports dadurch kenntlich gemacht werden, dass deren Signalisierungsmittel zum Beispiel permanent leuchten, mit einer anderen Frequenz blinken oder in eine andere Farbe umgeschaltet werden.

In Weiterbildung der Erfindung vorgesehen, dass die Signalisierungsmittel der zusammengehörenden Ports gleichzeitig permanent leuchten, eine gleiche Farbe aufweisen oder synchron zueinander blinken, während die übrigen Ports der Netzwerkgeräte blinken, eine andere Farbe aufweisen oder mit einer anderen Frequenz blinken.

In Weiterbildung der Erfindung ist zur Unterscheidung der Ports vorgesehen, dass die Signalisierungsmittel der zusammengehörenden Ports gleichzeitig permanent leuchten und die übrigen Signalisierungsmittel der Ports der Netzwerkgeräte, insbesondere aller Netzwerkgeräte des Netzwerkes, ausgeschaltet sind oder eine andere Helligkeit als die der leuchtenden Ports haben. Auch dadurch wird sichergestellt, dass die als zusammengehörig zu erkennenden Ports sich deutlich von den Ports der Netzwerkgeräte, vorzugsweise aller Netzwerkgeräte des Netzwerkes oder des Patchfeldes, unterscheiden.

Alternativ oder ergänzend ist in Weiterbildung der Erfindung vorgesehen, dass die Signalisierungsmittel der zusammengehörenden Ports synchron zueinander blinken und die übrigen Signalisierungsmittel der Ports der Netzwerkgeräte, insbesondere aller Netzwerkgeräte des Netzwerkes, phasenversetzt blinken, ausgeschaltet sind oder eine andere Helligkeit als die der leuchtenden Ports haben. Auch damit ist eine deutliche Unterscheidung zwischen denjenigen Signalisierungsmittel der Ports, die die normale Datenübertragung signalisieren, und der Ports mit der gleichen Konfiguration, möglich.

Von besonderem Vorteil ist es in Weiterbildung der Erfindung, wenn die Signalisierungsmittel der zusammengehörenden Ports in der gleichen Farbe angesteuert werden, wobei die übrigen Ports eine andere Farbe aufweisen. Dies kann besonders einfach durch die Verwendung zweifarbiger (oder auch mehrfarbiger) Signalisierungsmittel, wie zum Beispiel zwei- oder mehrfarbiger Leuchtdioden, erzielt werden. So ist es denkbar, dass während des normalen Betriebes der Datenübertragung alle Signalisierungsmittel der Ports der Netzwerkgeräte leuchten, zum Beispiel in Abhängigkeit der übertragenen Daten blinken, wohingegen die Ports mit der gleichen Konfiguration, mit der gleichen regelmäßigen oder unregelmäßigen Frequenz blinken, jedoch in einer anderen Farbe. Dadurch kann aufgrund des Farbunterschiedes sehr schnell festgestellt werden, welche Ports zusammengehören.

Im Folgenden ist die Idee noch einmal mit anderen Worten wiedergegeben und anhand verschiedener Beispiele näher erläutert.

IST-Zustand/Problem:
Im Moment ist es manchmal schwierig nachzuvollziehen, ob man bei komplexen Konfigurationen schon alles, auf allen Switches, auf allen Ports eines Switches richtig konfiguriert hat. Zum Beispiel, ob man schon eine VLAN=5 auf allen betroffenen Switches erzeugt hat und ob man alle geplante Ports auf allen Switches in diese VLAN aufgenommen hat. Das gilt natürlich auch für andere "per Bridge" bzw. "per Port" Parameter, wie Multiple-Spanning-Tree-Instanzen, GVRP-Protokoll, Profinet usw. Die Vollständigkeit einer Konfiguration ist nicht immer einfach feststellbar.

Idee mit Lösungsweg:
Es wird eine neue Funktion "Feature-LED-Signaling", bzw. "Parameter-LED-Signaling"-Funktion geschaffen, die mit Hilfe von LED-Blinken (Geräte-LEDs und/oder Port-LEDs) signalisieren würde, ob eine bestimmte Eigenschaft (oder Parameter) auf diesem Gerät oder nur auf diesem Port, bereits auf bestimmte Art konfiguriert wurde.

Beispiel:
Bei einem Klick z.B. auf VLAN5 in WebInterface oder in einer Netzmanagementsoftware (z.B. HiDiscovery) kommt man zu einem Kontextmenü, in dem man "Signaling" auswählen und damit aktivieren kann. Das würde in diesem Fall bedeuten, dass alle Ports des gegebenen Switches, die der VLAN5 angehören, anfangen sollen zu blinken (in dieser Zeit sollen auch andere Blink-Vorgänge, wie die von RSTP ausgesetzt werden). Dieser "VLAN5-Signaling"-Befehl könnte weiterhin (z. B. mittels LLDP) auch an andere Switche weitergegeben werden, sodass zum Schluss alle Ports auf allen Switches blinken würden, die bereits in die VLAN5 aufgenommen worden sind, also die gleiche Konfiguration aufweisen. Genauso könnte man z.B. es befehlen, dass alle Ports eines Netzwerkgerätes (insbesondere eines Switches) blinken sollen, die einer bestimmten MSTP-Instanz angehören, oder diese Ports blinken lassen, bei denen eine bestimmte Source-MAC-Adresse gelernt wurde, usw. Oder man könnte auch die Ports, die in einem Ringnetz (z.B. Hiperring) enthalten sind, blinken lassen, oder man könnte ein Switch, der in RSTP eine Root-Bridge ist, blinken lassen (diesmal alle Port des Switches).

Eine andere mögliche Art der Umsetzung dieser Idee könnte möglich sein und sie würde (außer auf den physikalisch vorhandenen Switches) die betroffenen Ports auf der grafischen Topologie-Darstellung blinken lassen (die betroffenen Ports könnten aber genauso mit einem zusätzlichen Text "VLAN5" versehen werden). So ein Mechanismus wäre in einer entsprechenden Software aufgrund der Tatsache, dass man den Zugriff auf alle MIBs aller Geräte hat, viel leichter realisierbar. Zu diesem Zweck könnte ein Port-Blink-Befehl implementiert werden (oder PortBlink-MIB), der an einen gewünschten Switch geschickt werden könnte.

Vorteile der Idee:
Eine solche Feature-Signaling-Funktion kann bestimmte aufwendige Netzkonfigurationen wesentlich erleichtern, indem die Vollständigkeit einer Konfiguration leichter überprüft werden könnte. Aus dem gleichen Grund kann auch die Fehlersuche erleichtert werden, weil man z.B. schnell sehen könnte, ob man versehentlich einen Port zu viel (oder zu wenig) in eine VLAN=X aufgenommen hat.
LLDP: Link Layer Discovery Protocol
RSTP: Rapid Spanning Tree Protocol
VLAN: Virtual Local Area Network
MIB: Management Information Base
MAC: Media Access Control
GVRP: GARP VLAN Registration Protocol
GARP: Generic Attribute Registration Protocols
LED: Light Emitting Diode

## Patentansprüche

1. Verfahren zum Betreiben eines Netzwerkes, wobei das Netzwerk mehrere Ports aufweisende Netzwerkgeräte umfasst und die Netzwerkgeräte über Kabel, die in jeweils einen Port der Netzwerkgeräte eingesteckt sind, zur Datenübertragung miteinander verbunden, wobei jeder Port ein Signalisierungsmittel aufweist, welches zwischen zumindest zwei Signalisierungszuständen umschaltbar ist, **dadurch gekennzeichnet, dass** alle Signalisierungsmittel derjenigen Ports der Netzwerkgeräte über eine auf das Netzwerk zugreifende Netzwerkmanagementsoftware und/oder eine in das Netzwerk integrierte Netzmanagementstation in einen als zusammengehörig erkennbaren Signalisierungszustand gebracht werden, die die gleiche VLAN-Konfiguration aufweisen, wobei der als zusammengehörig erkennbare Signalisierungszustand gegenüber den Signalisierungsmitteln der übrigen Ports eine andere Helligkeit oder Farbe aufweist, wobei der als zusammengehörig erkennbaren Signalzustand über einen Befehl durch die Netzwerkmanagementsoftware und/oder der Netzmanagementstation an die entsprechenden Netzwerkgeräte weitergegeben wird.

2. Verfahren nach Anspruch 1, **dadurch gekennzeichnet, dass** die Signalisierungsmittel über die auf das Netzwerk zugreifende Netzmanagementsoftware angesteuert werden, nachdem vorher in der Netzmanagementsoftware die anzuzeigende Konfiguration ausgewählt und zur Anzeige bestimmt wurde.

3. Verfahren nach Anspruch 1, **dadurch gekennzeichnet, dass** die Signalisierungsmittel über die in dem Netzwerk integrierte Netzmanagementstation angesteuert werden, nachdem vorher in der Netzmanagementstation die anzuzeigende Konfiguration ausgewählt und zur Anzeige bestimmt wurde.

4. Verfahren nach Anspruch 1, 2 oder 3, **dadurch gekennzeichnet, dass** die Signalisierungsmittel der zusammengehörenden Ports gleichzeitig permanent leuchten, eine gleiche Farbe aufweisen oder synchron zueinander blinken.

5. Verfahren nach Anspruch 1, 2 oder 3, **dadurch gekennzeichnet, dass** die Signalisierungsmittel der zusammengehörenden Ports gleichzeitig permanent leuchten und die übrigen Signalisierungsmittel der Ports der anderen Netzwerkgeräte ausgeschaltet sind oder eine andere Helligkeit als die der leuchtenden Ports haben.

6. Verfahren nach Anspruch 1, 2 oder 3, **dadurch gekennzeichnet, dass** die Signalisierungsmittel der zusammengehörenden Ports synchron zueinander blinken und die übrigen Signalisierungsmittel der Ports der anderen Netzwerkgeräte phasenversetzt blinken, ausgeschaltet sind oder eine andere Helligkeit als die der leuchtenden Ports haben.

7. Verfahren nach Anspruch 1, 2 oder 3, **dadurch gekennzeichnet, dass** die Signalisierungsmittel der zusammengehörenden Ports in der gleichen Farbe angesteuert werden.

## Claims

1. Method for operating a network, wherein the network comprises a plurality of network devices having ports and the network devices are connected to each other via cables, which are plugged into a respective port of the network devices, for data transmission, wherein each port has a signalling means which is switchable between at least two signalling states, **characterized in that** all signalling means of those ports of the network devices which have the same VLAN configuration are brought into a signalling state that can be recognized as related by means of network management software accessing the network and/or a network management station integrated in the network, wherein the signalling state which can be recognized as related has a different brightness or colour compared to the signalling means of the other ports, wherein the signal state which can be recognized as related is passed on to the corresponding network devices by the network management software and/or the network management station via a command.

2. Method according to Claim 1, **characterized in that** the signalling means are controlled via the network management software accessing the network after the configuration to be displayed has been selected beforehand in the network management software and determined for display.

3. Method according to Claim 1, **characterized in that** the signalling means are controlled via the network management station integrated in the network after the configuration to be displayed has been selected beforehand in the network management station and determined for display.

4. Method according to Claim 1, 2 or 3, **characterized in that** the signalling means of the related ports simultaneously permanently emit light, have an identical colour or flash in sync with each other.

5. Method according to Claim 1, 2 or 3, **characterized in that** the signalling means of the related ports simultaneously permanently emit light and the remaining signalling means of the ports of the other network devices are switched off or have a different brightness than that of the light-emitting ports.

6. Method according to Claim 1, 2 or 3, **characterized in that** the signalling means of the related ports flash in sync with each other and the remaining signalling means of the ports of the other network devices flash with a phase shift, are switched off or have a different brightness than that of the light-emitting ports.

7. Method according to Claim 1, 2 or 3, **characterized in that** the signalling means of the related ports are controlled in the same colour.

## Revendications

1. Procédé pour exploiter un réseau, le réseau comprenant des appareils réseau présentant plusieurs ports et les appareils réseau étant reliés entre eux pour la transmission de données par des câbles qui sont branchés chacun dans un port des appareils réseau, chaque port présentant un moyen de signalisation qui est apte à être commuté entre au moins deux états de signalisation, **caractérisé en ce que** tous les moyens de signalisation des ports des appareils réseau qui ont la même configuration VLAN sont amenés dans un état de signalisation reconnaissable comme appartenant au réseau, par l'intermédiaire d'un logiciel de gestion de réseau accédant au réseau et/ou d'une station de gestion de réseau intégrée dans le réseau, l'état de signalisation reconnaissable comme étant appartenant au réseau ayant une luminosité ou une couleur différente de celle des moyens de signalisation des autres ports, l'état de signalisation reconnaissable comme appartenant au réseau étant transmis aux appareils réseau correspondants par le biais d'une commande du logiciel de gestion de réseau et/ou de la station de gestion de réseau.

2. Procédé selon la revendication 1, **caractérisé en ce que** les moyens de signalisation sont commandés par le logiciel de gestion de réseau qui accède au réseau, après que la configuration à afficher ait été préalablement sélectionnée et désignée pour l'affichage dans le logiciel de gestion de réseau.

3. Procédé selon la revendication 1, **caractérisé en ce que** les moyens de signalisation sont commandés par la station de gestion de réseau intégrée dans le réseau, après que la configuration à afficher ait été sélectionnée et désignée pour l'affichage dans la station de gestion de réseau.

4. Procédé selon la revendication 1, 2 ou 3, **caractérisé en ce que** les moyens de signalisation des ports associés s'allument simultanément en permanence, présentent une même couleur ou clignotent de manière synchrone.

5. Procédé selon la revendication 1, 2 ou 3, **caractérisé en ce que** les moyens de signalisation des ports associés s'allument en permanence en même temps et que les autres moyens de signalisation des ports des autres appareils réseau sont éteints ou ont une luminosité différente de celle des ports allumés.

6. Procédé selon la revendication 1, 2 ou 3, **caractérisé en ce que** les moyens de signalisation des ports associés clignotent de manière synchrone et **en ce que** les autres moyens de signalisation des ports des autres appareils du réseau clignotent de manière déphasée, sont éteints ou ont une luminosité différente de celle des ports allumés.

7. Procédé selon la revendication 1, 2 ou 3, **caractérisé en ce que** les moyens de signalisation des ports associés sont commandés dans la même couleur.
